# EUROPÄISCHE PATENTSCHRIFT

(11) **EP 3 626 044 B1**
(45) Veröffentlichungstag und Bekanntmachung des Hinweises auf die Patenterteilung: **11.05.2022**
(21) Anmeldenummer: 19191622.0
(22) Anmeldetag: 14.08.2019
(51) Int. Cl.: A01F 15/07

(54) **LANDWIRTSCHAFTLICHE RUNDBALLENPRESSE**
AGRICULTURAL ROUND BALER
PRESSE À BALLES RONDES AGRICOLE

(30) Priorität: 19.09.2018 DE 102018007382
(43) Veröffentlichungstag der Anmeldung: 25.03.2020
(73) Patentinhaber: Usines CLAAS France S.A.S, 57140 St. Rémy / Woippy (FR)
(72) Erfinder: Rongvaux, Laurent, 54800 Tronville (FR); Arnould, Cyrille, 57645 Montoy-Flanville (FR)
(74) Vertreter: CLAAS Gruppe

(56) Entgegenhaltungen:
- EP-A1- 1 080 627
- EP-A1- 2 269 440
- EP-B1- 1 080 627
- DE-U1- 29 706 540

## Beschreibung

Die vorliegende Anmeldung betrifft eine Rundballenpresse gemäß dem Oberbegriff von Anspruch 1. Diese umfasst insbesondere einen mittels einer Mehrzahl von Führungsrollen geführten Pressriemen, der eine Presskammer begrenzt, und eine Zuführeinrichtung, mittels derer Erntegut durch einen Übertrittsquerschnitt hindurch der Presskammer der Rundballenpresse zuführbar ist, um dort in Kontakt mit dem umlaufenden Pressriemen zu einem Ballen geformt zu werden.

Rundballenpressen sind mit fester und mit variabler Presskammer bekannt. Rundballenpressen mit fester Presskammer nehmen im Betrieb zunächst eine große Menge Erntegut bei geringer Verdichtung auf, und beginnen erst dann, das Erntegut zu verdichten, wenn es anderenfalls keinen Platz mehr in der Presskammer findet. So entstehen Rundballen, die im Zentrum vergleichsweise gering, im Außenbereich hingegen stark verdichtet sind. Rundballen mit variabler Presskammer sind in der Lage, bereits bei Beginn der Ballenbildung das Erntegut stark zu verdichten und so Ballen mit weitgehend homogener hoher Dichte zu erzeugen, haben aber das Problem, dass die Form der Presskammer zu Beginn der Ballenbildung stark von der Idealform, d.h. der Zylinderform, abweicht, was das Anlaufen der Ballenerzeugung erschwert. Landwirte, die beide Typen von Ballen benötigen, waren daher lange Zeit gezwungen, für beide Typen die jeweils geeignete Ballenpresse vorzuhalten.

Aus EP 2 269 440 B1 ist eine Rundballenpresse mit einer sogenannten "variablen Presskammer" bekannt. Bei dieser Rundballenpresse hat der den Ballen formende Innenraum im leeren Zustand einen in etwa dreieckigen Querschnitt, wobei zwei Seiten des Dreiecks durch sich zwischen je zwei Führungsrollen geradlinig erstreckende Abschnitte des Pressriemens gebildet sind und die dritte Seite offen und dem Übertrittsquerschnitt der Zuführeinrichtung zugewandt ist. Diejenigen Führungsrollen, die sich an der der offenen dritten Seite gegenüberliegenden Ecke des Dreiecks befinden, sind in einer Stelleinrichtung zusammengefasst, die in einer Richtung quer zur dritten Seite bewegbar ist, um die Größe der Presskammer an die sich darin sammelnde Menge von Erntegut anpassen zu können.

Wenn die beiden Abschnitte des Pressriemens an der Stelleinrichtung zu Beginn der Ballenbildung einen spitzen Winkel aufspannen, kann der Fall auftreten, dass neu zugeführtes Erntegut von dem Abschnitt des Pressriemens, der auf die Stelleinrichtung zuläuft, am sich bildenden Ballen vorbeigeführt wird, bis es mit dem sich in entgegengesetzter Richtung bewegenden Abschnitt in Reibkontakt kommt und umgelenkt wird. Auf diese Weise kann zeitweilig neben dem sich bildenden Ballen ein kleinerer "Satellitenballen" entstehen. Indem beide gleichsinnig rotieren, behindern sie sich gegenseitig, und es kann zu Störungen der Ballenbildung kommen, wenn der Satellitenballen die Ecke verlässt, in der er entstanden ist, und in den Hauptballen integriert wird, oder die Ballenbildung komplett blockiert werden, falls der Satellitenballen so groß geworden ist, dass er nicht mehr zwischen dem Hauptballen und dem Pressriemen hindurchpasst. Zwar ist es grundsätzlich möglich, die Stelleinrichtung nah am Übertrittsquerschnitt zu platzieren und so den Winkel, in dem die Abschnitte des Pressriemens an der Stelleinrichtung aufeinandertreffen, stumpf zu machen, doch verlagert sich dadurch das Problem lediglich auf die Winkel, die an die offene dritte Seite des Dreiecks angrenzen. Dieses Problem wird insbesondere dann akut, wenn ähnlich wie in einer Ballenpresse vom Festkammertyp ein gering verdichteter Ballen erzeugt werden soll und zu diesem Zweck bereits zu Beginn der Ballenbildung die Stelleinrichtung in großem Abstand vom Übertrittsquerschnitt platziert wird.

Aus der DE 297 06 540 U1 ist eine Rundballenpresse gemäß dem Oberbegriff des Anspruchs 1 bekannt.

Aufgabe der vorliegenden Erfindung ist, eine Rundballenpresse anzugeben, die einen sicheren und problemlosen Start der Ballenbildung gewährleistet.

Die Aufgabe wird erfindungsgemäß mit den Merkmalen des Anspruchs 1 gelöst.

Durch die zweite Stelleinrichtung bekommt die Presskammer eine weitere Ecke. Damit vergrößern sich die Winkel, unter denen die Riemenabschnitte an den Ecken aufeinandertreffen, und die Neigung zur Entstehung von Satellitenballen sowie die Größe, bis zu der sie wachsen können, ist vermindert. Die Schwenkbeweglichkeit der Stelleinrichtungen ermöglicht eine kontinuierliche Größenanpassung der Presskammer an die Menge des darin versammelten Ernteguts.

Der Verlauf des Pressriemens kann nicht mit Hilfe von im Innern der Aussparung angeordneten Führungsrollen festgelegt werden, da diese durch das in der Aussparung zu verdichtende Erntegut blockiert würden. Damit die Stelleinrichtung dennoch die Position einer konkaven Ecke der Aussparung definieren kann, treffen zwei von dem Spalt wenigstens einer der Stelleinrichtungen ausgehende zweite Abschnitte des Riemens an einer Umlenkrolle zusammen. So kann über die Umlenkrolle die nötige Spannung aufrechterhalten werden, um den Pressriemen mit den Seiten des Spalts in Kontakt zu halten.

Um die nötige Spannung des Pressriemens auch dann aufrechterhalten zu können, wenn die Stelleinrichtung bewegt wird, ist die Umlenkrolle relativ zum Spalt und zum Chassis geführt bewegbar. Denkbar ist aber auch, die Umlenkrolle stationär vorzusehen und eine zum Ausgleich einer Bewegung der Stelleinrichtung bewegbare Rolle an anderer Stelle der Ballenpresse vorzusehen.

Die bewegliche Umlenkrolle kann insbesondere an einem relativ zum Chassis schwenkbaren Arm gehalten sein.

Um den Abstand zwischen Spalt und Umlenkrolle anpassen zu können, ist vorzugsweise ein Stellglied, insbesondere ein Hydraulikzylinder, einerseits an die Umlenkrolle und andererseits an den Spalt gekoppelt. Indem der Hydraulikzylinder durch eine angeschlossene Druckquelle mit einem vorgegebenen Druck beaufschlagt wird, kann die Spannung des Pressriemens vorgegeben werden, während sich die Position von Spalt und Umlenkrolle frei anpassen kann. D.h. es kann über die Spannung eine gewünschte Verdichtung des Ernteguts vorgegeben werden; die für diese Position erforderliche Position von Spalt und Umlenkrolle braucht nicht aktiv gesteuert zu werden.

Insbesondere wenn der Arm relativ zum Chassis frei schwenkbar ist, d.h. wenn kein Stellglied oder dergleichen zwischen dem Arm und dem Chassis wirksam ist, kann sich eine die Spannung des Pressriemens minimierende Stellung selbsttätig einstellen.

Während sich während der Ballenbildung beide Stellglieder im Mittel gleichmäßig in gleicher Richtung bewegen, um Platz für die wachsende Materialmenge des Ballens zu schaffen, ermöglicht die freie Schwenkbarkeit des Arms zeitweilig auch aneinander nicht gekoppelte oder gar gegenläufige Bewegungen der Stellglieder, die die Drehung eines nicht perfekt runden Ballens erleichtern.

Von den zwei Seiten des Spalts kann mindestens eine zur Reibungsminimierung durch eine Rolle gebildet sein, die in Kontakt mit dem Pressriemen drehbar ist.

Die Aussparung ist vorzugsweise viereckig, insbesondere trapezförmig, wobei eine dem Übertrittsquerschnitt zugewandte erste Seite des Vierecks offen ist und die drei weiteren Seiten des Vierecks durch erste Abschnitte des Pressriemens gebildet sind.

Die an die offene erste Seite angrenzenden ersten Abschnitte des Pressriemens sollten im Laufe der Ballenbildung aus einer zu den Spalten der Stelleinrichtungen hin konvergierenden in eine divergierende Stellung schwenken. So kann die Presskammer, obwohl nur zwei Ecken beweglich sind, während der gesamten Ballenbildung ein ausgewogenes, ein energieaufwendiges Durchkneten des Ballens während seiner Rotation minimierendes Verhältnis der Querschnittsabmessungen aufrechterhalten, und ein hoch verdichteter Ballen kann mit geringem Energieaufwand geformt werden.

Wenn in an sich bekannter Weise die Führungsrollen und der Pressriemen in einem Gehäuse mit zwei zum Entlassen eines fertigen Ballens auseinanderklappbaren Gehäuseteilen untergebracht sind, sollten die Stelleinrichtungen, um die Ballenausgabe nicht zu behindern, vorzugsweise auf die beiden Gehäuseteile verteilt sein.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1.: eine Rundballenpresse gemäß dem Stand der Technik,
- Fig. 2: einen schematischen Schnitt durch die erfindungsgemäße Rundballenpresse bei leerer, klein eingestellter Presskammer;
- Fig. 3: einen zu Fig. 2 analogen Schnitt in einer Anfangsphase der Bildung eines hochverdichteten Ballens;
- Fig. 4: einen zu Fig. 2 analogen Schnitt gegen Ende der Ballenbildung; und
- Fig. 5: einen schematischen Schnitt durch die erfindungsgemäße Rundballenpresse bei leerer, groß eingestellter Presskammer.

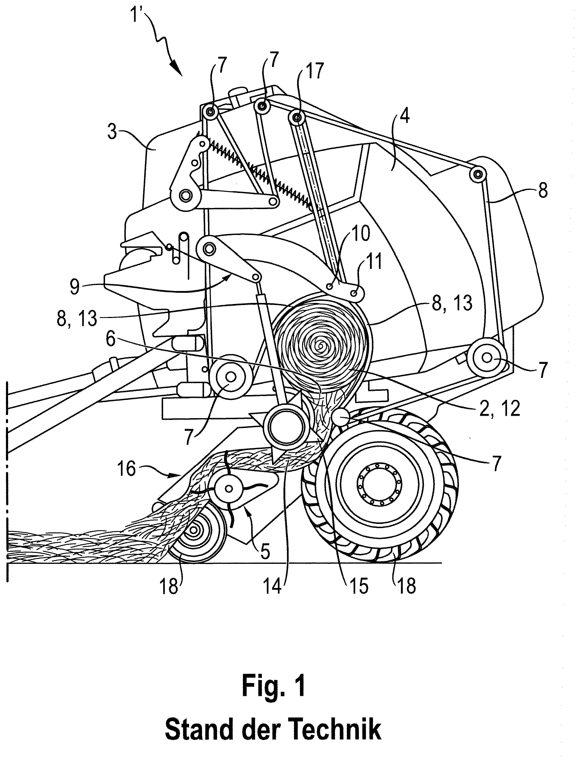

Fig. 1 zeigt eine Rundballenpresse 1' gemäß dem Stand der Technik. Diese umfasst ein zweiteiliges Gehäuse 3, das auf einem Chassis 16 mit Rädern 18 montiert ist und einen Innenraum 4 aufweist, sowie eine innerhalb des Innenraums 4 mittels eines Pressriemens 8 begrenzte Presskammer 12, innerhalb derer in dem in Fig. 1 gezeigten Zustand gerade ein Rundballen 2 gepresst wird. Der Pressriemen 8 ist mittels einer Mehrzahl von Führungsrollen 7 innerhalb des Innenraums 4 geführt, wobei eine der Führungsrollen 7 als Antriebsrolle ausgeführt und z.B. über eine Zapfwelle an den Motor eines nicht dargestellten Zugfahrzeugs gekoppelt ist. Auf diese Weise ist der endlose sowie in sich flache Pressriemen 8 fortlaufend um die Führungsrollen 7 bewegbar. Letzte erstrecken sich parallel zu einer Querrichtung der Rundballenpresse 1'.

Die bekannte Rundballenpresse 1' weist eine Zuführeinrichtung 5 auf, die in Form einer rotierenden Welle ausgebildet ist. Diese ist mit vier sich radial ausgehend von einer äußeren Mantelfläche der Welle erstreckenden Förderelementen ausgestattet, sodass die Zuführeinrichtung 5 im Zuge ihrer Rotation Erntegut vom Boden aufnehmen und in Richtung des Innenraums 4 der Rundballenpresse 1' fördern kann. Hierbei wird das Erntegut durch einen Zuführkanal 14 geführt, wobei in dem gezeigten Beispiel das Erntegut vor einem Übertritt von dem Zuführkanal 14 in die Presskammer 12 mittels einer Schneideinrichtung 15 zerkleinert wird. Das Erntegut tritt schließlich durch einen Übertrittsquerschnitt 6 hindurch in die Presskammer 12 ein.

Letztere ist nach unten hin durch den von einer Führungsrollen 7 begrenzten Übertrittsquerschnitt 6 und die sich darin erstreckende Schneideinrichtung 15 sowie nach oben und zu den Seiten durch den an den Führungsrollen 7 umlaufenden Pressriemen 8 begrenzt. Um den Pressriemen 8 im Zuge des Anwachsens des Rundballens 2 entsprechend nachführen zu können, verfügt die Rundballenpresse 1' über eine Stelleinrichtung 9. Diese umfasst einen Schwenkarm 33, der um eine am Gehäuse 3 feste Schwenkachse 32 verschwenkbar gelagert ist. An einem der Schwenkachse 32 abgewandten Ende des Schwenkarms 33 verfügt die Stelleinrichtung 9 über zwei Stellrollen 10, 11. Diese sind im Zuge einer Verschwenkung des Schwenkarms 33 um dessen Schwenkachse 32 innerhalb des Innenraums 4 verlagerbar, sodass eine mittels der Stellrollen 10, 11 bewirkte Umlenkung des Pressriemens 8 gleichermaßen verlagerbar ist. Die Stelleinrichtung 9 wirkt hier mit einer den Stellrollen 10, 11 zugeordneten Umlenkrolle 17 zusammen, die beabstandet von den Stellrollen 10, 11 angeordnet ist. Der Pressriemen 8 ist dabei derart geführt, dass er sich ausgehend von der ersten Stellrolle 10 zu der Umlenkrolle 17 und sodann von der Umlenkrolle 17 zu der zweiten Stellrolle 11 erstreckt. Durch eine Schwenkbewegung des Stellarms im Gegenuhrzeigersinn nähern sich die Stellrollen 10, 11 der Umlenkrolle 17. Weiterhin wirkt die Rundballenpresse 1' mit einer Spannvorrichtung zusammen, die unter Einwirkung einer Federkraft den Pressriemen 8 spannt.

Benachbart zur Umlenkrolle 17 verläuft eine Achse, um die die zwei Teile 3', 3" des Gehäuses 3 in fachüblicher Weise gegeneinander schwenkbar sind, um den Rundballen 2 nach Fertigstellung auszuwerfen.

Wie sich besonders gut anhand der Darstellung gemäß Figur 1 ergibt, ist die Presskammer 12 der Rundballenpresse 1' einerseits durch den Übertrittsquerschnitt 6 und andererseits durch Abschnitte des Pressriemens 8 begrenzt, die sich zwischen den den Übertrittsquerschnitt 6 begrenzenden Umlenkrollen 7 und den Stellrollen 10, 11 erstrecken. Ohne den Rundballen 2 darin würden die Abschnitte 13 des Pressriemens 8 geradlinig verlaufen und eine Aussparung in Form eines einseitig offenen Dreiecks im Verlauf des Pressriemens bilden. Dieser dreiecksförmige Querschnitt der Presskammer 12 geht mit den eingangs dargelegten Nachteilen einher. Insbesondere ist die gezeigte Rundballenpresse 1' gemäß dem Stand der Technik nicht dazu geeignet, schwach verdichtete Rundballen 2 zu erzeugen.

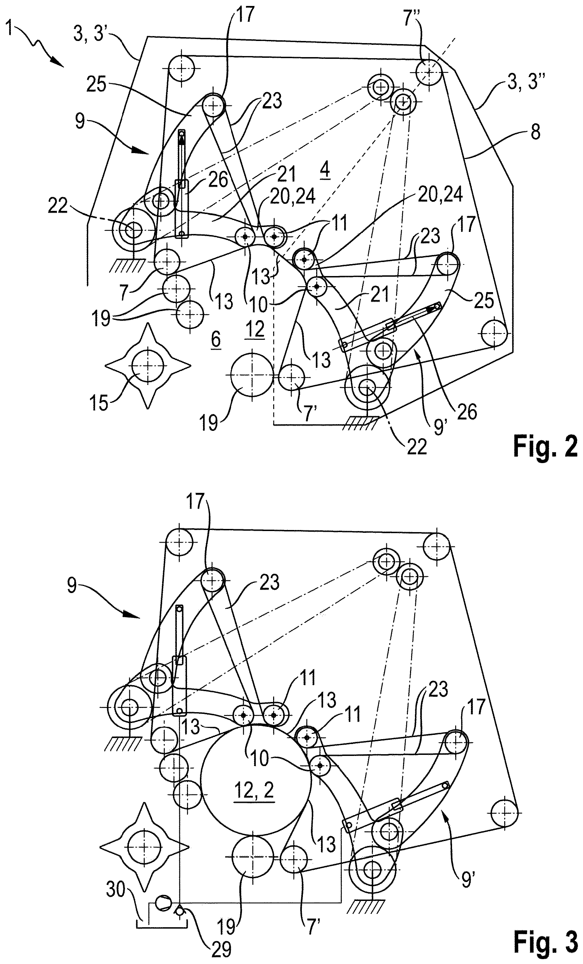

Fig. 2 zeigt einen schematischen Schnitt durch eine erfindungsgemäße Ballenpresse 1. Ein Chassis und ein Gehäuse der Ballenpresse 1 sind in der Fig. weggelassen, da sie sich von denen der Ballenpresse 1' nicht wesentlich unterscheiden und die obigen Ausführungen zu Chassis und Gehäuse auch für die Ballenpresse 1 gelten. Die einzige in Fig. 2 sichtbare Komponente des Chassis ist die Schneideinrichtung 15.

Wie im Falle der Fig. 1 ist der Pressriemen 8 innerhalb des Gehäuses mittels einer Mehrzahl von Führungsrollen 7, 7' geführt. Die Führungsrollen 7 sind in einem ersten Teil 3' des Gehäuses 3 gelagert, das fest am Chassis 16 montiert ist, die Führungsrollen 7' in einem gegen den ersten schwenkbaren zweiten Teil 3". Die Schwenkachse, über die die Gehäuseteile 3', 3" verbunden sind, verläuft benachbart zu einer Führungsrolle 7".

Eine Presskammer 12 ist begrenzt durch Abschnitte 13 des Pressriemens, die sich, solange die Presskammer leer ist, von einer Führungsrolle 7 des am Chassis 16 festen Gehäuseteils 3' zu einer Stellrolle 10 einer ersten Stelleinrichtung 9, von einer Stellrolle 11 der ersten Stelleinrichtung 9 zu einer Stellrolle 11 einer zweiten Stelleinrichtung 9' sowie von einer Stellrolle 10 der zweiten Stelleinrichtung 9' zu einer Führungsrolle 7' des schwenkbaren Gehäuseteils 3" erstrecken. Die Abschnitte 13 bilden so eine kurze Grundlinie und zwei Seiten einer als Presskammer 12 fungierenden trapezförmigen Aussparung im Verlauf des Pressriemens 8. Zwischen den Führungsrollen 7, 7' erstreckt sich ein Übertrittsquerschnitt 6, über den Erntegut in die Presskammer 12 gelangt. Im hier gezeigten Fall ist der Übertrittsquerschnitt 6 zusätzlich durch Rollen 19 verengt, die nicht vom Pressriemen 8 umschlungen sind.

Die Stellrollen 10, 11 einer jeden Stelleinrichtung 9, 9' sind zwischen zwei Stirnplatten 20 drehbar und in festem Abstand zueinander aufgehängt. Die Stirnplatten 20 sind ihrerseits an ein freies Ende eines Arms 21 angelenkt, der seinerseits um eine am chassisfesten oder am schwenkbaren Gehäuseteil feste Achse 22 schwenkbar ist. Durch einen Spalt 24 zwischen den Stellrollen 10, 11 erstrecken sich jeweils zwei Abschnitte 23 des Pressriemens 8 zu einer Umlenkrolle 17. Die Umlenkrolle 17 ist am freien Ende eines Arms 25 gehalten, der seinerseits an den Arm 21 angelenkt ist. Ein hydraulisches Stellglied 26 ist an die Arme 21, 25 angelenkt, um sie gegeneinander zu schwenken. Die Arme 21, 25 und Stellglieder 26 der Stelleinrichtungen 9, 9' sind jeweils baugleich und spiegelbildlich zueinander angeordnet. Deshalb genügt es, um gleiche Winkel zwischen den Armen 21, 25 beider Stelleinrichtungen 9, 9' einzustellen, die beiden Stellglieder mit einem gleichen hydrostatischen Druck zu beaufschlagen.

Die in Fig. 2 gezeigte Konfiguration kann eingestellt werden, indem die Stellglieder 26 soweit ausgefahren und dadurch die Arme 21 aufeinander zu geschwenkt werden, bis sie eine Grenze ihrer Schwenkbewegungsfreiheit erreichen. Dann ist entspricht die Konfiguration der Fig. 2 der kleinsten realisierbaren Presskammer 12 und eignet sich somit als Anfangskonfiguration für die Erzeugung eines hoch verdichteten Ballens.

Fig. 3 zeigt eine Anfangsphase der Bildung eines solchen Ballens 2. Das in der Presskammer 12 akkumulierte Erntegut hat begonnen, die Abschnitte 13 des Pressriemens 8, die sich zwischen den Führungsrollen 7, 7' und den Stellrollen 10, 11 erstrecken, nach außen auszulenken, doch die Stellrollen 10, 11 beider Stelleinrichtungen 9, 9' befinden sich noch in der Ausgangsposition der Fig. 2.

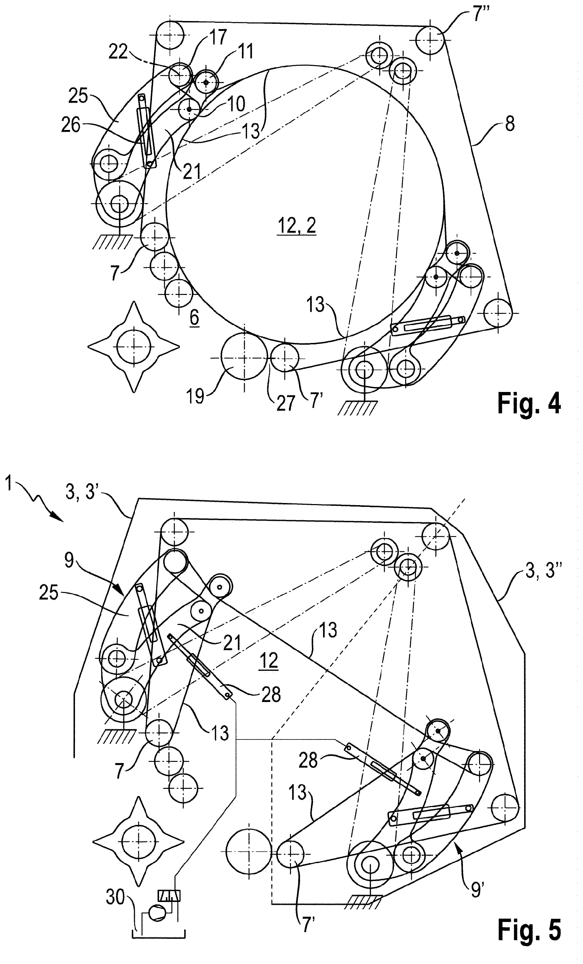

Wenn weiteres Erntegut zugeführt wird, wird der Druck des Ballens 2 auf die Abschnitte 13 irgendwann so groß, dass die von den Abschnitten 23 auf die Umlenkrollen 17 der Stelleinrichtungen 9, 9' ausgeübte Zugkraft den hydrostatischen Druck in den Stellgliedern 26 übersteigt, und Hydraulikfluid aus den Stellgliedern 26 über ein Druckbegrenzungsventil 29 zu einem Tank 30 abfließt. Indem sich somit die Arme 21, 25 einander annähern, werden die Abschnitte 23 kürzer, die Abschnitte 13 werden dementsprechend länger und die Presskammer 12 wächst, bis in der Konfiguration der Fig. 4 die Arme 21, 25 aneinander anschlagen und dadurch weiterer Längenzunahme der Abschnitte 13 eine Grenze setzen. Der Ballen 2 ist nun fertig und wird über eine Öffnung 27 ausgegeben, die sich beim Hochklappen des schwenkbaren Gehäuseteils zwischen der Umlenkrolle 7' und der zu ihr benachbarten Rolle 19 öffnet. Indem während des gesamten Wachstumsvorgangs ein hoher hydrostatischer Druck in den Stellgliedern 26 aufrechterhalten wird, kann ein über seinen gesamten Durchmesser hinweg gleichmäßig verdichteter Ballen 2 erhalten werden.

Weitere Stellglieder 28 können jeweils zwischen dem chassisfesten Gehäuseteil 3' und einem der Arme 21, 25 der Stelleinrichtung 9 sowie zwischen dem schwenkbaren Gehäuseteil 3" und einem der Arme 21, 25 der Stelleinrichtung 9' vorgesehen sein, um die Orientierung der Arme 21, 25 relativ zum Gehäuse festzulegen. Mit Hilfe dieser Stellglieder ist die in Fig. 5 gezeigte Konfiguration einstellbar, bei der die Arme 21 im Vergleich zu Fig. 2 auswärts geschwenkt und der Winkel zwischen den Armen 21 und 25 jeder Stellvorrichtung 9, 9' verkleinert ist. So wird noch vor Beginn der Ballenbildung eine geräumige Presskammer 12 geschaffen, in die das Erntegut zunächst eingespeist und vom umlaufenden Pressriemen 8 in Drehung versetzt werden kann, ohne dabei wesentlich verdichtet zu werden.

Erst wenn die Menge des Ernteguts auch hier groß genug ist, um die Abschnitte 13 auszulenken, setzt eine Verdichtung ein, die jedoch das Zentrum des Ballens 2 nur noch in geringem Umfang erreicht. Dieses bleibt daher locker, auch wenn später zugeführtes, sich am Umfang des Ballens 2 anlagerndes Erntegut stark verdichtet wird. So wird ein Ballen 2 erhalten, der zwar äußerlich fest und stark verdichtet, im Innern aber geringer verdichtet ist.

Die Stellglieder 28, die zu Beginn der Ballenbildung benötigt werden, um die Anfangskonfiguration der Presskammer einzustellen, werden nicht mehr benötigt, sobald der Ballen 2 selber groß und fest genug ist, um die Arme 21 radial nach außen zu drücken. Um in diesem Stadium eine freie Schwenkbewegung der Arme 21 zu ermöglichen, können die Stellglieder 28 direkt mit dem Tank verbunden werden, so dass sie drucklos sind und der Schwenkbewegung der Arme 21 ohne nennenswerten Widerstand folgen, oder sie können mechanisch von den Armen entkoppelt werden.

### Bezugszeichenliste

- 1: Rundballenpresse
- 2: Rundballen
- 3: Gehäuse
- 4: Innenraum
- 5: Zuführeinrichtung
- 6: Übertrittsquerschnitt
- 7: Führungsrolle
- 8: Pressriemen
- 9: Stelleinrichtung
- 10: Stellrolle
- 11: Stellrolle
- 12: Presskammer
- 13: Abschnitt (des Pressriemens)
- 14: Zuführkanal
- 15: Schneideinrichtung
- 16: Chassis
- 17: Umlenkrolle
- 18: Rad
- 19: Rolle
- 20: Stirnplatte
- 21: Arm
- 22: Achse
- 23: Abschnitt (des Pressriemens)
- 24: Umlenkrolle
- 25: Arm
- 26: Stellglied
- 27: Öffnung
- 28: Stellglied
- 29: Druckbegrenzungsventil
- 30: Tank

## Patentansprüche

1. Landwirtschaftliche Rundballenpresse (1), insbesondere zum Pressen halmartigen Ernteguts zu Rundballen (2), umfassend
ein Chassis (16);
eine Zuführeinrichtung (5), mittels derer Erntegut durch einen Übertrittsquerschnitt (6) hindurch einem Innenraum (4) der Rundballenpresse (1) zuführbar ist,
eine Mehrzahl von Führungsrollen (7, 7', 7"), die sich in einer Querrichtung der Rundballenpresse (1) erstrecken,
einen Pressriemen (8), der in Form eines Endlosriemens ausgebildet und derart um die Führungsrollen (7, 7', 7") gelegt ist, dass seine Außenseite eine als Presskammer (12) fungierende, dem Übertrittsquerschnitt (6) zugewandte Aussparung bildet,
eine erste Stelleinrichtung (9) und eine zweite Stelleinrichtung (9'), die jeweils einen sich parallel zu den Führungsrollen (7) erstreckenden Spalt (24) umfasst, durch den sich jeweils der Pressriemen (8) hin und zurück erstreckt, wobei zwei erste von dem jeweiligen Spalt ausgehende Abschnitte (13) des Pressriemens (8) die Aussparung begrenzen, wobei die erste Stelleinrichtung in einer die Aussparung vergrößernden oder verkleinernden Richtung verstellbar ist, wobei die zweite Stelleinrichtung (9') zum Vergrößern und Verkleinern der Aussparung relativ zum Chassis (16) schwenkbar ist, **dadurch gekennzeichnet, dass** zwei von dem Spalt (24) wenigstens einer der Stelleinrichtungen (9, 9') ausgehende zweite Abschnitte (23) des Pressriemens (8) an einer Umlenkrolle (17) zusammentreffen und dass die Umlenkrolle (17) relativ zum Spalt (24) und zum Chassis (16) geführt bewegbar ist.

2. Rundballenpresse nach Anspruch 1, **dadurch gekennzeichnet, dass** die Umlenkrolle (17) an einem relativ zum Chassis (16) schwenkbaren Arm (21) gehalten ist.

3. Rundballenpresse nach Anspruch 2, **dadurch gekennzeichnet, dass** der Arm (21) wenigstens zeitweilig in einen relativ zum Chassis (16) frei schwenkbaren Zustand versetzbar ist, um eine die Spannung des Pressriemens (8) minimierende Stellung aufzusuchen.

4. Rundballenpresse nach einem der Ansprüche 1 bis 3, **dadurch gekennzeichnet, dass** ein Stellglied (26), insbesondere ein Hydraulikzylinder, zum Verstellen des Abstands zwischen Spalt (24) und Umlenkrolle (17) einerseits an die Umlenkrolle (17) und andererseits an den Spalt (24) gekoppelt ist.

5. Rundballenpresse nach einem der Ansprüche 1 bis 4, **dadurch gekennzeichnet, dass** wenigstens einer der Spalte (24) durch wenigstens eine Rolle (10, 11) begrenzt ist, an der jeweils ein erster Abschnitt (13) und ein zweiter Abschnitt (23) des Pressriemens (8) zusammentreffen.

6. Rundballenpresse nach einem der vorhergehenden Ansprüche, **dadurch gekennzeichnet, dass** die als Presskammer (12) fungierende Aussparung viereckig, insbesondere trapezförmig ist, wobei eine dem Übertrittsquerschnitt (6) zugewandte erste Seite des Vierecks offen ist und die drei weiteren Seiten des Vierecks durch erste Abschnitte des Pressriemens gebildet sind.

7. Rundballenpresse nach Anspruch 6, **dadurch gekennzeichnet, dass** die an die offene erste Seite angrenzenden ersten Abschnitte (13) des Pressriemens (8) im Laufe einer Aufweitung der Presskammer (12) aus einer zu den Spalten (24) der Stelleinrichtungen (9, 9') hin konvergierenden in eine divergierende Stellung schwenken.

8. Rundballenpresse nach einem der vorhergehenden Ansprüche, **dadurch gekennzeichnet, dass** die Führungsrollen (7) und der Pressriemen (8) in einem Gehäuse (3) mit zwei zum Entlassen eines fertigen Ballens (2) auseinanderklappbaren Gehäuseteilen (3', 3") untergebracht sind und dass die erste Stelleinrichtung (9) am ersten Gehäuseteil (3') und die zweite Stelleinrichtung (9') am zweiten Gehäuseteil (3") vorgesehen ist.

## Claims

1. An agricultural round baler (1), in particular for baling stalked harvested material into round bales (2), comprising
a chassis (16) ;
a feed device (5) by means of which harvested material can be fed through a transfer section (6) to an inner chamber (4) of the round baler (1),
a plurality of guide rollers (7, 7', 7") which extend in a transverse direction of the round baler (1),
a baler belt (8) which is configured in the form of a continuous belt and is passed around the guide rollers (7, 7', 7") in a manner such that its outside forms a recess which faces the transfer section (6) and which functions as a bale chamber (12),
a first adjustment device (9) and a second adjustment device (9') which respectively comprise a gap (24) which extends parallel to the guide rollers (7) through each of which the baler belt (8) passes and returns, wherein two first sections (13) of the baler belt (8) which emanate from the respective gap delimit the recess, wherein the first adjustment device can be adjusted in a direction which broadens the recess or narrows the recess, wherein the second adjustment device (9') is pivotable with respect to the chassis (16) in order to broaden or narrow the recess, **characterized in that** two second sections (23) of the baler belt (8) emanating from at least one of the adjustment devices (9, 9') meet at a guide roller (17) and **in that** the guide roller (17) can be guided and moved with respect to the gap (24) and to the chassis (16).

2. The round baler according to claim 1, **characterized in that** the guide roller (17) is retained on an arm (21) which is pivotable with respect to the chassis (16).

3. The round baler according to claim 2, **characterized in that** at least intermittently, the arm (21) can be moved into a state which is freely pivotable with respect to the chassis (16) in order to find a position which minimises the tension of the baler belt (8).

4. The round baler according to one of claims 1 to 3, **characterized in that** in order to adjust the distance between the gap (24) and the guide roller (17), an actuator (26), in particular a hydraulic cylinder, is coupled on one side to the guide roller (17) and on the other side to the gap (24).

5. The round baler according to one of claims 1 to 4, **characterized in that** at least one of the gaps (24) is delimited by at least one roller (10, 11) at which respectively a first section (13) and a second section (23) of the baler belt (8) meet.

6. The round baler according to one of the preceding claims, **characterized in that** the recess functioning as the bale chamber (12) is quadrangular in shape, in particular trapezoidal, wherein a first side of the quadrangle which faces the transfer section (6) is open and the other three sides of the quadrangle are formed by first sections of the baler belt.

7. The round baler according to claim 6, **characterized in that** during the course of broadening the bale chamber (12), the first sections (13) of the baler belt (8) bordering the open first side swivel from a position in which they converge towards the gaps (24) of the adjustment devices (9, 9') to a position in which they diverge.

8. The round baler according to one of the preceding claims, **characterized in that** the guide rollers (7) and the baler belt (8) are accommodated in a housing (3) with two housing portions (3', 3") which can be hinged outwards to release a finished bale (2), and **in that** the first adjustment device (9) is provided on the first housing portion (3') and the second adjustment device (9') is provided on the second housing portion (3").

## Revendications

1. Presse agricole à balles rondes (1), en particulier pour le pressage en balles rondes (2) de produit récolté sous forme de tiges, incluant
un châssis (16) ;
un équipement d'amenée (5) au moyen duquel du produit récolté peut être amené, à travers une section transversale de passage (6), à un espace intérieur (4) de la presse à balles rondes (1),
une pluralité de rouleaux de guidage (7, 7', 7") qui s'étendent dans une direction transversale de la presse à balles rondes (1),
une courroie de pressage (8) qui est conçue en forme de courroie sans fin et disposée autour des rouleaux de guidage (7, 7', 7") de façon que son côté extérieur forme un évidement faisant fonction de chambre de pressage (12), tourné vers la section transversale de passage (6), un premier équipement de positionnement (9) et un second équipement de positionnement (9'), lesquels incluent respectivement un interstice (24) qui s'étend parallèlement aux rouleaux de guidage (7) et à travers lequel respectivement la courroie de pressage (8) s'étend en va-et-vient, deux premières portions (13) de la courroie de pressage (8) partant de l'interstice respectif limitant l'évidement, le premier équipement de positionnement étant réglable dans une direction agrandissant ou réduisant l'évidement, le second équipement de positionnement (9') étant pivotant pour agrandir et réduire l'évidement par rapport au châssis (16), **caractérisée en ce que** deux deuxièmes portions (23) de la courroie de pressage (8) partant de l'interstice (24) au moins d'un des équipements de positionnement (9, 9') se rencontrent au niveau d'un rouleau de renvoi (17), et **en ce que** le rouleau de renvoi (17) est déplaçable de manière guidée par rapport à l'interstice (24) et au châssis (16).

2. Presse à balles rondes selon la revendication 1, **caractérisée en ce que** le rouleau de renvoi (17) est fixé sur un bras (21) pivotant par rapport au châssis (16).

3. Presse à balles rondes selon la revendication 2, **caractérisée en ce que** le bras (21) peut être amené au moins temporairement dans un état librement pivotant par rapport au châssis (16) afin de rechercher une position minimisant la tension de la courroie de pressage (8).

4. Presse à balles rondes selon une des revendications 1 à 3, **caractérisée en ce qu'**un organe de positionnement (26), en particulier un vérin hydraulique, est couplé d'une part au rouleau de renvoi (17) et d'autre part à l'interstice (24) pour régler la distance entre l'interstice (24) et le rouleau de renvoi (17).

5. Presse à balles rondes selon une des revendications 1 à 4, **caractérisée en ce qu'**au moins un des interstices (24) est limité par au moins un rouleau (10, 11) au niveau duquel respectivement une première portion (13) et une deuxième portion (23) de la courroie de pressage (8) se rencontrent.

6. Presse à balles rondes selon une des revendications précédentes, **caractérisée en ce que** l'évidement faisant fonction de chambre de pressage (12) est quadrangulaire, en particulier trapézoïdal, un premier côté du quadrilatère tourné vers la section transversale de passage (6) étant ouvert et les trois autres côtés du quadrilatère étant formés par des premières sections de la courroie de pressage.

7. Presse à balles rondes selon la revendication 6, **caractérisée en ce que** les premières portions (13) de la courroie de pressage (8) adjacentes au premier côté ouvert pivotent, au cours d'un élargissement de la chambre de pressage (12), d'une position convergeant vers les interstices (24) des équipements de positionnement (9, 9') vers une position divergente.

8. Presse à balles rondes selon une des revendications précédentes, **caractérisée en ce que** les rouleaux de guidage (7) et la courroie de pressage (8) sont logés dans un carter (3) à deux parties de carter (3', 3") aptes à basculer à l'opposé l'une de l'autre pour éjecter une balle finie (2), et **en ce que** le premier équipement de positionnement (9) est prévu sur la première partie de carter (3') et le deuxième équipement de positionnement (9') sur la seconde partie de carter (3").
